# FASCICULE DE BREVET EUROPEEN

(11) **EP 0 953 792 B1**
(45) Date de publication et mention de la délivrance du brevet: **08.01.2003**
(21) Numéro de dépôt: 99400994.2
(22) Date de dépôt: 23.04.1999
(51) Int. Cl.: F16H 63/20

(54) **Commande interne de boîte de vitesses avec dispositif de rappel d'organes de sélection**
Interne Steuervorrichtung für Getriebe mit Federvorrichtung im Wählorgan
Internal control of gearbox with spring device in selection mechanism

(30) Priorité: 30.04.1998 FR 9805459
(43) Date de publication de la demande: 03.11.1999
(73) Titulaire: AUTOMOBILES PEUGEOT, 75116 Paris (FR); AUTOMOBILES CITROEN, 92200 Neuilly-sur-Seine (FR)
(72) Inventeur: Ploe, Pierre, 25200 Montbeliard (FR)
(74) Mandataire: Gendraud, Pierre

(56) Documents cités:
- EP-A- 0 501 417
- EP-A- 0 737 827
- US-A- 4 510 819
- US-A- 4 569 247

## Description

La présente invention se rapporte à une commande interne de boîte de vitesses avec dispositif de rappel d'organes de sélection.

Elle concerne plus précisément les commandes de vitesses dans lesquelles, pour actionner alternativement plusieurs éléments juxtaposés d'engagement de rapports, un axe de commande porte au moins un doigt transversal propre à être d'abord engagé sélectivement, par coulissement de l'axe, dans l'une de plusieurs encoches agencées chacune dans l'un desdits éléments, puis à entraîner l'élément ainsi sélectionné, par rotation de l'axe, de manière à réaliser l'engagement -ou passage- d'un rapport.

Ces commandes comprennent un moyen de rappel en position médiane de l'axe dans son coulissement pour la sélection des rapports. Ce moyen est constitué en général de deux ressorts hélicoïdaux entourant l'axe, disposés coaxialement respectivement de part et d'autre du doigt, et prenant appui chacun sur l'une des deux parois opposées du carter. Il en résulte un nombre de pièces relativement important pour obtenir un moyen de rappel, ce qui entraîne des temps de montage importants.

Il est connu du document US 4 569 247 A une commande selon le préambule de la revendication 1 dans laquelle un mécanisme de détente comprenant un logement sous la forme d'une bague pivotante autour de l'axe de commande mais fixée axialement, un téton de guidage vissé sur le carter de boite et guidant la bague selon un mouvement axial, une bille métallique maintenue en rotation dans une ouverture élargie de l'axe et un ressort métallique de compression assemblée à l'intérieur de l'ouverture pour repousser la bille vers le haut du carter.

Il est connu également du document EP 0737827 A une commande du type précité dans laquelle deux ressorts de compression sont disposées sur une tige parallèle à l'axe de commande et qui constitue un moyen de guidage immobilisant en rotation une clé d'interverrouillage et une extension radiale fourchue de cette clé chevauche la tige en étant apte à coulisser sur elle entre les deux ressorts.

L'invention vise à pallier l'inconvénient mentionné ci-dessus en proposant un dispositif de commande du type susmentionné qui soit simple à monter.

A cet effet, selon la présente invention:
- le doigt de passage est apte à coulisser à l'intérieur de la bague suivant un sens unique de déplacement de l'axe de manière à sélectionner un rapport et en ce que ladite bague est rappelée en position repos au moyen d'un desdits ressorts de sélection,
- le doigt de passage est apte à coulisser à l'intérieur de la bague suivant un sens unique de déplacement de l'axe de manière à sélectionner un rapport et en ce que celui-ci est rappelé dans sa position médiane par l'intermédiaire d'un desdits ressorts,
- la bague constitue un moyen de guidage desdits ressorts,
- la bague est constituée de deux parois circulaires transversales par rapport à l'axe de commande, pourvues respectivement d'un orifice pour le passage dudit axe et reliées ensemble au moyen d'une paroi longitudinale présentant ainsi en section longitudinale la forme générale d'un "U",
- la paroi longitudinale est pourvue d'une ouverture oblongue destinée à coopérer avec une goupille s'étendant radialement par rapport à l'axe fixant le doigt de passage audit axe,
- l'un des deux ressorts de rappel est comprimé entre la paroi de la bague et une paroi solidaire du carter et en ce que l'autre ressort est comprimé entre le doigt de passage et l'autre paroi de la bague.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue en perspective d'une commande interne de boîte de vitesses en position médiane de sélection de rapports,
- les figures 2 à 4 sont des vues en coupe selon la ligne II-II de la figure 1, dans trois positions différentes de sélection de rapports, et
- la figure 5 est une vue en perspective de la bague.

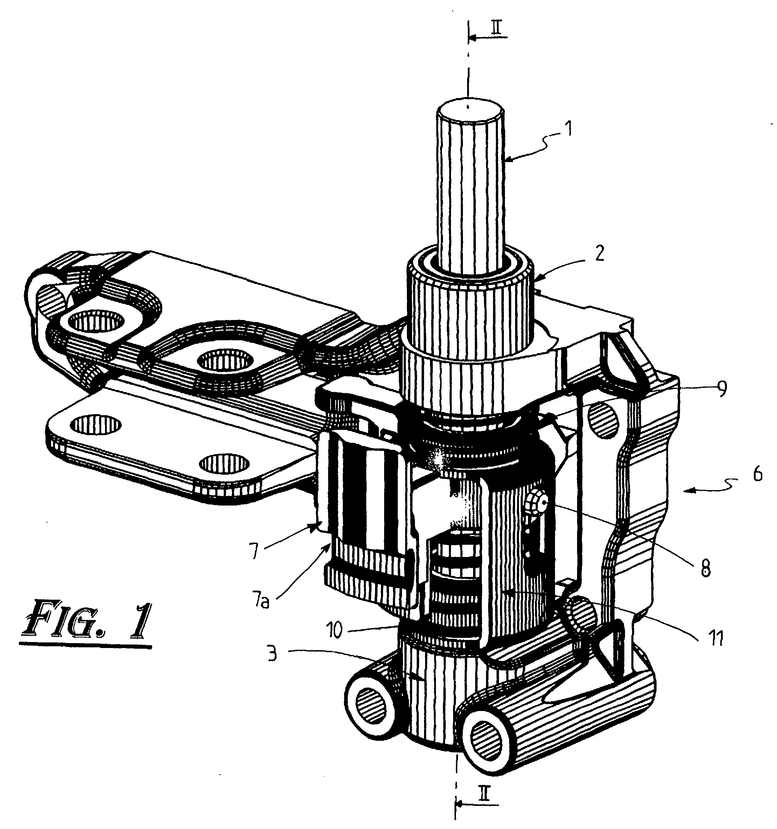

On a représenté à la figure 1 un axe de commande 1 propre à coulisser dans deux paliers 2 et 3 délimités respectivement par des parois parallèles 4 et 5 d'un support 6 fixé à un carter d'une boîte de vitesses.

De manière classique, un doigt de passage 7 est fixé à l'axe de commande 1 par une goupille 8 s'étend radialement de sorte que son extrémité 7a soit située au niveau de plusieurs éléments non représenté mobiles orthogonalement à l'axe 1.

Ces éléments, appelés noix, sont solidaires de tiges coulissantes ou de leviers reliés à des fourchettes propres à déplacer des pignons ou des crabots pour réaliser l'engagement ou le dégagement des différents rapports de la boîte de vitesses.

L'extrémité 7a du doigt de passage 7 est disposée de telle sorte que par coulissement axial de l'axe 1, cette dernière est propre à être sélectivement engagé dans l'un desdits éléments puis à entraîner la noix sélectionnée, par rotation de l'axe 1, de manière à réaliser le passage de l'un des deux rapports correspondants.

De manière classique, il est prévu un moyen de rappel en position médiane -ou point mort- de l'axe de commande 1 dans son coulissement pour la sélection des rapports. Ce moyen est constitué de deux ressorts hélicoïdaux 9 et 10 entourant l'axe 1, disposés coaxialement respectivement de part et d'autre du doigt de passage 7.

Selon la présente invention, les ressorts de rappel 9 et 10 de sélection sont comprimés séparément en fonction du rapport engagé par l'intermédiaire d'une bague 11 disposée sur l'axe de commande 1.

Cette bague 11 est constituée de deux parois circulaires 12, 13 transversales par rapport à l'axe de commande 1, pourvues respectivement d'un orifice 12a, 13a pour le passage dudit axe 1 et reliées ensemble au moyen d'une paroi longitudinale 17, comme visible sur la figure 5, ayant ainsi en section longitudinale la forme générale d'un "U".

Sur les faces supérieures de chaque paroi circulaire 12, 13, en considérant les figures, est fixé une portion cylindrique tubulaire respectivement 14 et 15 destinée à guider les ressorts de rappel 9 et 10 ainsi que la bague 11 sur l'axe 1 et offrir également une butée de sélection.

Le doigt de passage 7 est disposé, comme représenté sur les figures, à l'intérieur de la bague 11 entre les deux parois circulaires 12, 13. Ce doigt de passage est interposé à l'intérieur de la bague de telle sorte que ladite bague 11 soit apte à être déplacée avec l'axe de commande 1 et le doigt de passage 7 associé suivant un sens unique de déplacement de ce dernier de manière à sélectionner un rapport.

L'engagement du rapport est ensuite réalisé par rotation de l'axe 1. Afin de s'assurer du bon positionnement des pièces les unes par rapport aux autres la goupille 8 traverse une ouverture oblongue 16 réalisée dans la paroi longitudinale 17 de la bague 11, représentée aux figures 1 et 5, de sorte que cette goupille 8 permet le déplacement en rotation de la bague 11.

Ainsi l'un 9 des deux ressorts de rappel est comprimé entre la paroi 12 de la bague 11 et la paroi 4 du support 6 permettant ainsi lors du déplacement du doigt de passage 7 dans le sens de déplacement de la bague 11 le rappel en position repos de la bague 11 représentée aux figues 1, 2 et 4. L'autre ressort 10 est comprimé entre le doigt de passage 7 et l'autre paroi 13 de la bague 11, la bague 11 étant alors en repos -ou en butée- contre la paroi 5.

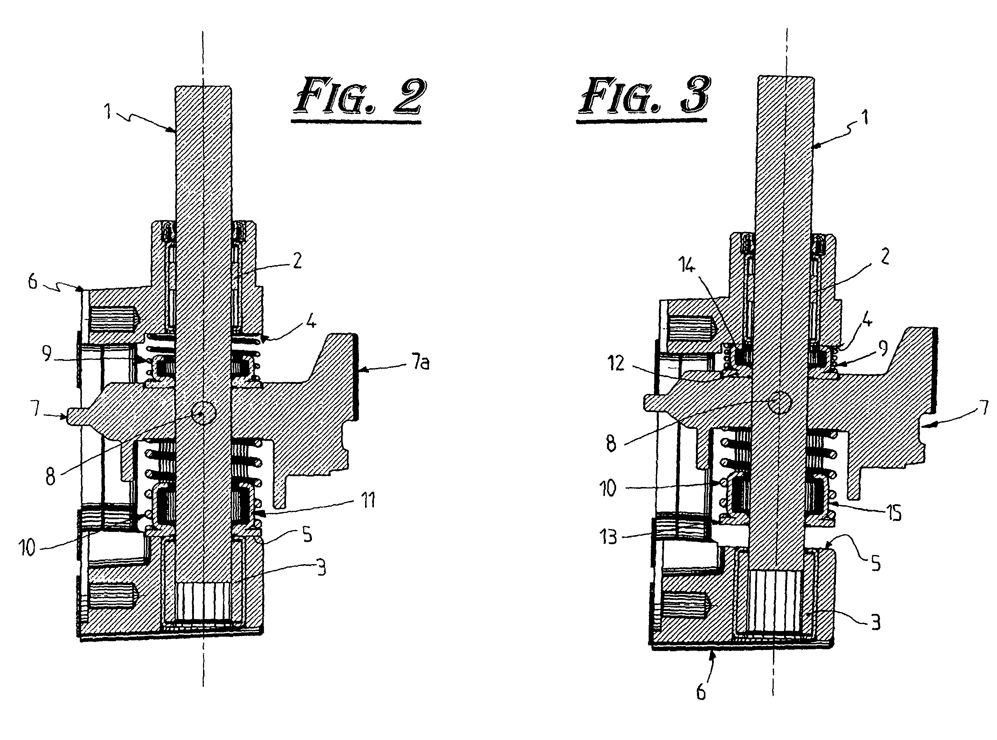

En position médiane de l'axe de commande 1 (figures 1 et 2) le doigt de passage 7 est en butée sur la paroi 12 de la bague 11, tandis que la bague 11 est en position repos en appui par l'intermédiaire de la paroi 13 contre l'une des parois 5 du support 6.

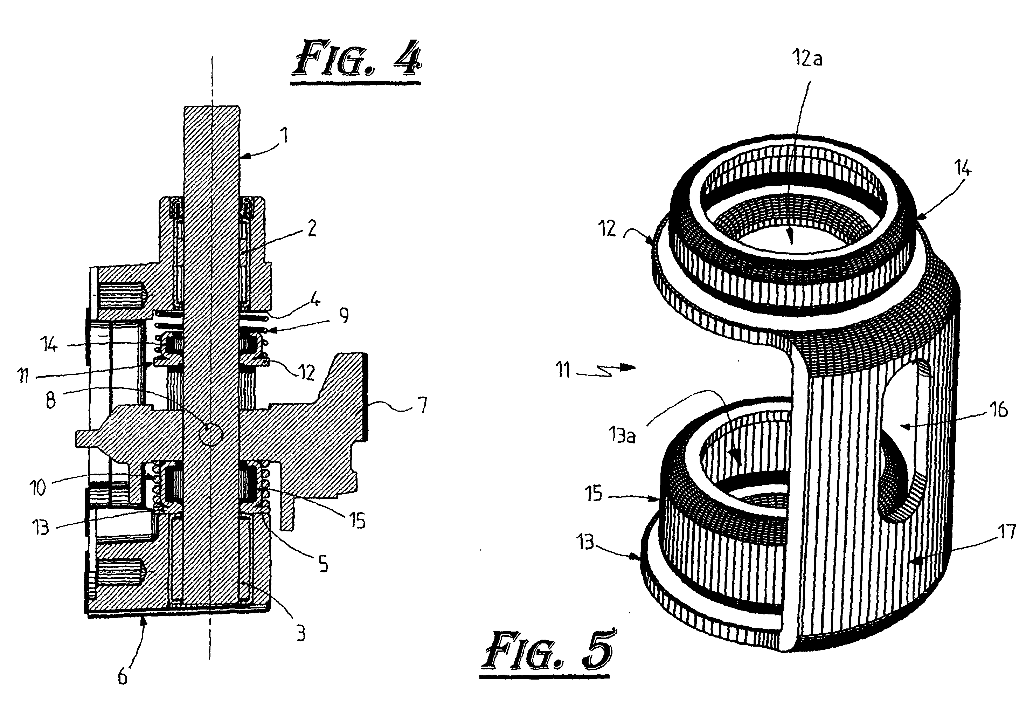

Ainsi quand l'axe 1 est déplacé vers la paroi 4 de manière à sélectionner par exemple le rapport de Sème ou de marche arrière (figure 3), le doigt de passage 7 en appui sur la paroi 12 de la bague 11 pousse la bague 11 contre la paroi 4 et comprime le ressort 9 qui assure alors seul le rappel en position médiane ; et quand l'axe 1 est déplacé vers la paroi 5 de manière à sélectionner le 1er ou le 2ème rapport (figure 4), le doigt de passage 7 est apte à coulisser à l'intérieur de la bague 11, uniquement dans ce sens, en étant guidé par la goupille 8 dans le trou oblong 16, le ressort 10 est alors comprimé et assure seul le rappel en position médiane de l'axe 1.

On notera qu'en sélection du rapport de Sème ou de marche arrière, la bague empêche le ressort de rappel 10 de se décomprimer et inversement lors de la sélection du 1er ou du 2ème rapport.

On comprend à la lecture de la description ci-dessus que le dispositif ainsi réalisé s'avère particulièrement simple à réaliser, peu coûteux et rapide à monter du fait qu'une seule pièce la bague 11 permet de réaliser plusieurs fonctions à savoir le fonctionnement des ressorts de rappel de manière indépendante, le guidage des ressorts, la butée en sélection et le positionnement en position médiane.

## Revendications

1. Dispositif de commande d'une boîte de vitesses dans le carter de laquelle, pour actionner alternativement plusieurs éléments juxtaposés d'engagement de rapports, un axe de commande (1) porte un doigt de passage (7) transversal qui est propre à être d'abord engagé sélectivement, par coulissement de l'axe (1), dans l'un desdits éléments, puis à entraîner l'élément sélectionné, par rotation de l'axe (1), de manière à réaliser l'engagement d'un rapport, le dispositif comprenant par ailleurs, pour rappeler l'axe (1) en position médiane de sélection des rapports, deux ressorts (9; 10) hélicoïdaux agissant coaxialement de part et d'autre du doigt de passage (7),dans lequel les ressorts de rappel (9, 10) de sélection sont comprimés séparément en fonction du rapport engagé par l'intermédiaire d'une bague (11) disposée sur l'axe (1) de commande, **caractérisé en ce que** le doigt de passage (7) est apte à coulisser à l'intérieur de la bague (11) suivant un sens unique de déplacement de manière à sélectionner un rapport et **en ce que** celui-ci est rappelé dans sa position médiane par l'intermédiaire d'un (10) desdits ressorts (9, 10).

2. Dispositif selon la revendication 1, **caractérisé en ce que** la bague (11) constitue un moyen de guidage (14, 15) desdits ressorts (9, 10).

3. Dispositif selon l'une quelconque des revendications précédentes, **caractérisé en ce que** la bague (11) est constituée de deux parois circulaires (12, 13) transversales par rapport à l'axe de commande (1), pourvues respectivement d'un orifice (12a, 13a) pour le passage dudit axe (1) et reliées ensemble au moyen d'une paroi longitudinale (17) présentant ainsi en section longitudinale la forme générale d'un "U".

4. Dispositif selon la revendication 3, **caractérisé en ce que** la paroi longitudinale (17) est pourvue d'une ouverture oblongue (16) destinée à coopérer avec une goupille (8) s'étendant radialement par rapport à l'axe (1) fixant le doigt de passage (7) audit axe (1).

5. Dispositif selon l'une quelconque des revendications 3 à 4, **caractérisé en ce que** l'un (9) des deux ressorts (9, 10) de rappel est comprimé entre la paroi (12) de la bague (11) et une paroi (4) solidaire du carter et **en ce que** l'autre ressort (10) est comprimé entre le doigt de passage (7) et l'autre paroi (13) de la bague (11).

## Patentansprüche

1. Schaltvorrichtung eines Schaltgetriebes, in dessen Gehäuse zur abwechselnden Betätigung mehrerer nebeneinander liegender Elemente zum Einlegen von Gängen eine Schaltachse (1) einen querliegenden Übergangsfinger (7) trägt, der geeignet ist, zunächst selektiv durch Gleiten der Achse (1) in eines der Elemente einzugreifen und dann das ausgewählte Element durch Drehung der Achse (1) anzutreiben, um das Einlegen eines Gangs durchzuführen, wobei die Vorrichtung außerdem zum Zurückholen der Achse (1) in die Mittelstellung der Auswahl der Gänge zwei zylindrische Schraubenfedern (9; 10) aufweist, die koaxial zu beiden Seiten des Übergangsfingers (7) wirken, wobei die Rückholfedern (9, 10) getrennt in Abhängigkeit vom eingelegten Gang mit Hilfe eines Rings (11) komprimiert werden, der auf der Schaltachse (1) angeordnet ist, **dadurch gekennzeichnet, daß** der Übergangsfinger (7) in der Lage ist, innerhalb des Rings (11) in einer einzigen Verschieberichtung zu gleiten, um einen Gang auszuwählen, und daß er mit Hilfe einer (10) der Federn (9, 10) in seine Mittelstellung zurückgeholt wird.

2. Vorrichtung nach Anspruch 1, **dadurch gekennzeichnet, daß** der Ring (11) ein Führungsmittel (14, 15) für die Federn (9, 10) bildet.

3. Vorrichtung nach einem der vorhergehenden Ansprüche, **dadurch gekennzeichnet, daß** der Ring (11) aus zwei kreisförmigen Wänden (12, 13) besteht, die in bezug auf die Schaltachse (1) quer liegen, je mit einer Öffnung (12, a, 13a) für den Durchgang der Achse (1) versehen und miteinander über eine Längswand (17) verbunden sind, wodurch sie im Längsschnitt die allgemeine Form eines U aufweisen.

4. Vorrichtung nach Anspruch 3, **dadurch gekennzeichnet, daß** die Längswand (17) mit einer länglichen Öffnung (16) versehen ist, die mit einem Stift (8) zusammenwirken soll, der sich radial in bezug auf die Achse (1) erstreckt und den Übergangsfinger (7) an der Achse (1) befestigt.

5. Vorrichtung nach einem der Ansprüche 3 bis 4, **dadurch gekennzeichnet, daß** eine (9) der beiden Rückholfedern (9, 10) zwischen der Wand (12) des Rings (11) und einer fest mit dem Gehäuse verbundenen Wand (4) komprimiert wird, und die andere Feder (10) zwischen dem Übergangsfinger (7) und der anderen Wand (13) des Rings (11) komprimiert wird.

## Claims

1. Control device for a gear box in the casing of which, in order to alternately actuate several juxtaposed gear-engagement elements, a control shaft (1) carries a transverse selector finger (7) which is suitable for being first engaged selectively, by sliding of the shaft (1), in one of said elements, then for driving the selected element, by rotation of the shaft (1), so as to carry out the engagement of a gear, the device comprising in addition, in order to return the shaft (1) to the median gear-selection position, two helicoidal springs (9; 10) acting coaxially on either side of the selector finger (7), in which the return springs (9,10) for selection are compressed separately depending on the gear engaged by means of a ring (11) arranged on the control shaft (1), **characterised in that** the selector finger (7) is capable of sliding within the ring (11) in a single direction of displacement so as to select a gear and **in that** said gear is returned to its median position by the intermediary of one (10) of said springs (9, 10).

2. Device according to Claim 1, **characterised in that** the ring (11) constitutes a means (14, 15) for guiding said springs (9,10).

3. Device according to any one of the preceding claims, **characterised in that** the ring (11) is constituted by two circular walls (12, 13) transverse to the control shaft (1), provided respectively with an aperture (12a, 13a) through which said shaft (1) can pass and connected together by means of a longitudinal wall (17) thus being generally U-shaped in longitudinal section.

4. Device according to Claim 3, **characterised in that** the longitudinal wall (17) is provided with an oblong opening (16) intended to co-operate with a pin (8) extending radially relative to the shaft (1) fixing the selector finger (7) to said shaft (1).

5. Device according to any one of Claims 3 to 4, **characterised in that** one (9) of the two return springs (9, 10) is compressed between the wall (12) of the ring (11) and a wall (4) integral with the casing and **in that** the other spring (10) is compressed between the selector finger (7) and the other wall (13) of the ring (11).
